Europäisches Patentamt

European Patent Office

Office européen des brevets

(19)

(11) Veröffentlichungsnummer: **0 160 914**
**B1**

(12) **EUROPÄISCHE PATENTSCHRIFT**

(45) Veröffentlichungstag der Patentschrift: **13.06.90**

(21) Anmeldenummer: **85105196.1**

(22) Anmeldetag: **29.04.85**

(51) Int. Cl.⁵: **C 08 L 77/00, C 08 L 51/04, C 08 L 27/18, C 08 J 3/00**

(54) **Polyamid-Formmassen mit hohen Zähigkeiten.**

(30) Priorität: **11.05.84 DE 3417476**

(43) Veröffentlichungstag der Anmeldung:
**13.11.85 Patentblatt 85/46**

(45) Bekanntmachung des Hinweises auf die Patenterteilung:
**13.06.90 Patentblatt 90/24**

(84) Benannte Vertragsstaaten:
**CH DE FR GB IT LI NL SE**

(56) Entgegenhaltungen:
**EP-A-0 131 751**
**DE-A-2 822 438**
**FR-A-2 311 814**
**GB-A-2 144 434**
**US-A-4 306 040**

(73) Patentinhaber: **BAYER AG**
**D-5090 Leverkusen 1 Bayerwerk (DE)**

(72) Erfinder: **Trabert, Ludwig, Dr.**
**Leydelstrasse 67**
**D-4150 Krefeld (DE)**
Erfinder: **Lindner, Christian, Dr.**
**Riehler Strasse 200**
**D-5000 Köln 60 (DE)**
Erfinder: **Binsack, Rudolf, Dr.**
**Bethelstrasse 4a**
**D-4150 Krefeld (DE)**
Erfinder: **Merten, Josef, Dr.**
**Krünsend 30**
**D-4052 Korschenbroich 1 (DE)**
Erfinder: **Hinz, Jürgen, Dr.**
**Kämmerhofstrasse 181**
**D-4150 Krefeld (DE)**
Erfinder: **Christoph, Geert, Dr.**
**Wiedstrasse 4**
**D-4047 Dormagen (DE)**
Erfinder: **Weber, Gunter Bernd, Dr.**
**Buschstrasse 169**
**D-4150 Krefeld (DE)**
Erfinder: **Haupt, Heinrich, Dr.**
**Bodelschwinghstrasse 15**
**D-4150 Krefeld (DE)**

## Beschreibung

Die Erfindung betrifft thermoplastische Formmassen mit verbesserten Zähigkeiten bei tiefen Temperaturen aus Polyamid, vernetzten Pfropfkautschuken aus der Reihe der Dienkautschuke und der Acrylatkautschuke, die durch gemeinsame Fällung mit Tetrafluorethylenpolymerisaten erhalten wurden.

Die Verbesserung der Zähigkeit von Polyamid-Formmassen durch Pfropfkautschuke ist bekannt (DE—OS 27 58 615, EP—A 3 126, DE—OS 31 01 771, DE—OS 31 20 803).

Diese Formmassen sind aber für wichtige Anwendungen, beispielsweise im Kraftfahrzeugbereich, nicht zufriedenstellend.

So hat sich gezeigt, daß komplizierte Formteile schlecht entformbar sind. Insbesondere die Klebetemperatur der Massen ist zu gering, so daß der fertige, aber noch weiche Formkörper an der Form haftet und sich beim Entformen verzieht. Dies gilt insbesondere für Formmassen aus Polyamid mit viel Pfropkautschuk.

Durch die Zugabe der Pfropfpolymerisate zu Polyamid wird auch dessen Steifigkeit reduziert und bei Beflammung neigen diese Formmassen dazu, brennend abzutropfen.

Die Polyamid-Formmassen der vorliegenden Erfindung lassen sich dagegen gut entformen, haben gute Zähigkeit auch bei tiefen Temperaturen sowie hohe Steifigkeit und tropfen bei Beflammung nicht brennend ab. Sie enthalten Polyamid und ein kautschukelastisches Pfropfpolymerisat sowie eine kleine Menge eines Tetrafluorethylenpolymerisates, das als Mischung mit dem Pfropfpolymerisat eingearbeitet wird. Diese Mischung wird durch Koagulation einer Mischung der wäßrigen Dispersion des Pfropfpolymerisates und einer wäßrigen Dispersion des Tetrafluorethylenpolymerisates hergestellt.

Bemerkenswert ist hierbei, daß bereits eine kleine Menge Tetrafluorethylenpolymerisat einen großen Einfluß auf die technologischen Eigenschaften der Legierung ausübt.

Polyamid-Tetrafluorethylenpolymerisat-Mischungen sind bekannt (z.B. DE—AS 27 03 419, DE—OS 28 22 438, EP 23 047), haben aber keine verbesserte Zähigkeit und Steifigkeit. Sie werden hergestellt, indem man das Tetrafluorethylenpolymerisat in Pulverform einarbeitet.

US—A—4 306 040 bzw. FR—A—2 311 814 betreffen Kautschaukhaltige Polyamid-Formmassen, denen Nukleierungsmittel wie Polytetrafluorethylen sowie Entformungsmittel zugesetzt werden können.

Gegenstand der Erfindung sind thermoplastische Formmassen aus:

A. 65—97, vorzugsweise 80—95, insbesondere 82—90 Gew.-% eines Polyamids und

B. 3—35, vorzugsweise 5—20, insbesondere bevorzugt 10—18 Gew.-% eines Pfropfkautschuks mit einem Gelgehalt von mindestens 50 Gew.-%, vorzugsweise 80 Gew.-%, und insbesondere von mindestens 90 Gew.-%, und einer Glasübergangstemperatur unter $-20°C$, wobei sich die Komponenten auf 100 Gew.-% ergänzen,

enthaltend 0,1—1 Gew.-%, vorzugsweise 0,25—0,8 Gew.-%, bezogen auf die Summe aus A+B, Tetrafluorethylenpolymerisat.

Gegenstand der Erfindung ist auch ein Verfahren zur Herstellung der Formmassen, das dadurch gekennzeichnet ist, daß man

a) zunächst eine wäßrige, feinteilige Dispersion eines Pfropfpolymerisates B mit einer Dispersion eines Tetrafluorethylenpolymerisates mit mittleren Teilchengrößen von 0,05—20 µm vermischt, so daß das Gewichtsverhältnis von Pfropfpolymerisat B zu Tetrafluorethylenpolymerisat zwischen 80:20 und 99:1 ist,

b) aus dieser Mischung die Polymeren durch Koagulation isoliert und trocknet, und

c) das erhaltene Gemisch, gegebenenfalls nach Granulierung, mit Polyamid, gegebenenfalls weiterem Pfropfpolymerisat und gegebenenfalls Additiven in der Schmelze vermischt.

Als Polyamide A eignen sich alle thermoplastischen Polyamide, vorzugsweise teilkristalline Polyamide. So können als teilkristalline Polyamide Polyamid-6, Polyamid-66 oder deren Copolymere eingesetzt werden oder Polyamide, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure und deren Diaminkomponente ganz oder teilweise aus m- und/oder p-Xylylendiamin und/oder Hexanmethylendiamin und/oder 2,4,4-Trimethylhexamethylendiamin und/oder Isophorondiamin besteht.

Außerdem sind Polyamide geeignet, die aus Lactamen mit 6—12 C-Atomen unter Mitverwendung einer oder mehrerer der oben genannten Ausgangskomponenten hergestellt worden sind. Besonders bevorzugte teilkristalline Polyamide sind Polyamid-6 und Polyamid-66.

Die Polyamide bestizen vorzugsweise eine relative Viskosität (gemessen an einer 1 gew.-%igen Lösung in m-Kresol bei 25°C) von 2,0—5,0, besonders bevorzugt von 2,5 bis 4,0.

Bevorzugte Pfropfkautschuke B besitzen mittlere Teilchendurchmesser $d_{50}$ von 0,05 bis 1, vorzugsweise von 0,1 bis 0.8, insbesondere von 0,2 bis 0,8 µm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messung (W. Scholtan, H. Lange, Kolloid. Z. und Z. Polymere 250 (1972), 782—796) oder mittels Elektronenmikroskopie und anschließender Teilchenauszählung (G. Kämpf, H. Schuster, Angew. makromolekulare Chemie, 14, (1970), 111—129) oder mittels Lichtstreuungsmessung.

Die Pfropfkautschuke B sind vernetzt und haben einen Gelgehalt von mindestens 50 Gew.-%, vorzugsweise von mindestens 80 Gew.-% und insbesondere von mindestens 90 Gew.-%, bezogen auf B.

Die Gelgehalte der vernetzten Dienkautschuke werden bestimmt bei 25°C in Toluol, die Gelgehalte der vernetzten Acrylatkautschuke bei 25°C in Dimethylformamid (M. Hoffmann, H. Krämer, R. Kuhn, Polymeranalytik I und II, Georg Thieme Verlag, Stuttgart 1977).

Bevorzugte Pfropfkautschuke B sind Pfropfpolymerisate von 15—60, vorzugsweise von 20 bis 50, insbesondere 25 bis 40 Gew.-% wenigstens eines Vinyl- oder Vinylidenmonomeren vorzugsweise aus der Reihe Styrol, α-Methylstyrol, Acrylnitril, $C_1$—$C_8$-Alkylacrylat, $C_1$—$C_8$-Alkylmethacrylat, Hydroxy-$C_2$—$C_8$-alkyl(meth)acrylat, Epoxy-$C_2$—$C_8$-alkyl(meth)acrylat auf 40 bis 85, vorzugsweise 50 bis 80, insbesondere 60 bis 75 Gew.-% eines teilchenförmigen, vernetzten Dien- oder Acrylatkautschuks.

Die Pfropfmonomeren können einzeln oder auch in Mischungen auf die Pfropfkautschuk-Grundlage aufgepfropft werden. Bevorzugte Pfropfmonomere sind Methylmethacrylat sowie Mischungen aus Styrol und Methylmethacrylat im Mengenverhältnis 10:90 bis 50:50 und Mischungen aus Styrol und Acrylnitril im Mengenverhältnis 90:10 bis 50:50.

Bevorzugte Dienkautschuke sind vernetzte Homo- und/oder Copolymerisate aus konjugierten $C_4$—$C_6$-Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$—$C_4$-Alkoholen, wie z.B. Methylacrylat, Ethylacrylat, Methylmethacrylat, Ethylmethacrylat, enthalten.

Die Herstellung der Dienkautschuke als Pfropfgrundlage und der Pfropfkautschuke wird z.B. in "Methoden der Organischen Chemie" (Houben-Weyl), Bd. 14/1, Georg Thieme Verlag, Stuttgart 1961, S. 393—406, sowie in Ullmanns Encyclopädie der technischen Chemie, 4. Auflage, Bd. 19, Verlag Chemie, Weinheim, 1981, S. 279—284, beschrieben.

Bevorzugt werden als Pfropfkautschuke die in der DE—OS 27 42 176 beschriebenen Produkte.

Bevorzugte Pfropfgrundlagen auf Basis Acrylatkautschuk sind Homo-Polymerisate von $C_1$—$C_8$-Alkylacrylaten und Copolymerisate dieser Alkylacrylate mit bis zu 40 Gew.-%, bezogen auf Copolymerisat, anderer Vinylmonomerer, wie Styrol, Acrylnitril, Methylmethacrylat, Vinylester, Vinylether.

Die Acrylatkautschuke sind im allgemeinen chemisch vernetzt, wozu bevorzugt kleine Mengen vernetzender Monomerer mit mehr als einer copolymerisierbaren Doppelbindung einpolymerisiert werden. Geeignet sind z.B. Ester ungesättigter $C_3$—$C_{12}$-Monocarbonsäuren und ungesättigter einwertiger $C_2$—$C_{12}$-Alkohole oder gesättigter $C_2$—$C_{20}$-Polyole mit 2 bis 4 OH-Gruppen, wie mehrfach ungesättigte heterocyclische Verbindungen, z.B. Trivinyl-, Triallaylcyanurat und -isocyanurat; insbesondere Triallylcyanurat; polyfunktionelle Vinylverbindungen wie Di- und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders vevorzugte vernetzende Monomere sind die cyclischen Monomeren Triallylcyanurat, Triallylisocyanurat, Trivinylcyanurat, Trisacryloylhexahydro-s-triazin, Triallylbenzole.

Die Menge der vernetzenden Monomeren beträgt vorzugsweise 0,02—5, insbesondere 0,05—2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch ihrerseits Pfropfpolymere mit mehrschaligem Aufbau sein, die einen vernetzten Dienkautschuk aus einem oder mehreren konjugierten Dienen, wei Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydienkerns in solchen mehrschaligen Kautschuken kann 0,1—80, bevorzugt 10—50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat und Triallylisocyanurat vernetzt sind (beschrieben in DE—OS 3006804),

b) einen Polybutadienkern enthalten (beschrieben in DE—OS 32 00 070),

Bei der Herstellung der Pfropfkautschuke B durch Pfropfcopolymerisation, die üblicherweise in Gegenwart von Radikalstartern, z.B. wasserlöslichen Initiatoren, Emulgatoren oder Komplexbildnern/ Pfropfaktivatoren, sowie Reglern durchgeführt wird, bilden sich im allgemeinen neben dem eigentlichen Pfropfcopolymerisat in bestimmten Ausmaß auch freie Polymerisate bzw. Copolymerisate der die Pfropfhülle bildenden Pfropfmonomeren.

Pfropfkautschuk B im Sinne der Erfindung ist deshalb das durch Polymerisation von Pfropfmonomeren in Gegenwart des Kautschuklatex erhaltene Produkt.

Die Erfindungsmäßen Formmassen weisen optimale Eigenschaften auf, wenn die Menge an freiem (Co)Polymerisat im Pfropfprodukt B 15 Gew.-%, vorzugsweise 10 Gew.-%, insbesondere 7 Gew.-%, bezogen auf B, nicht übersteigt. Der Staudinger-Index dieser freien (Co)Polymerisate soll weniger als 0,6 dl/ g, vorzugsweise weniger als 0,4 dl/g betragen, gemessen in Dimethylformamid bei 25°C.

EP 0 160 914 B1

Besonders bevorzugte Pfropfkautschuke sind z.B. in den DE—OS 27 42 176, 29 41 0125, 31 51 441, 32 00 070 und in der EP—A 34 748 beschrieben.

Die erfindungsgemäß geeigneten Tetrafluorethylenpolymerisate sind Polymere mit Fluorgehalten von 65—76 Gew.-%, vorzugsweise 70—76 Gew.-%. Beispiele sind Polytetrafluorethylen, Tetrafluorethylen-Hexafluorpropylen-Copolymere oder Tetrafluorethylencopolymerisate mit geringen Mengen fluorfreier, copolymerisierbarer, ethylenisch ungesättigter Monomerer. Die Polymerisate sind bekannt. Sie werden als feinteilige wäßrige Dispersion mit einem Festgehalt zwischen 30—60 Gew.-% eingesetzt. Die Dispersionsteilchengröße liegt bei 0,05—20 µm, vorzugsweise 0,08—10 µm. (Vgl. "Vinyl and Related Polymers" von Schildknecht, Verlag John Wiley & Sons, Inc., New York, 1952, Seite 484—494; "Fluorpolymers" von Wall, Verlag Wiley-Interscience, Abteilung von John Wiley & Sons, Inc. New York, 1972; "Encyclopedia of Polymer Science and Technology", Verlag Interscience Publishers, Abteilung von John Wiley & Sons, Inc., New York, Band 13, 1970, Seite 623—654; "Modern Plastics Encyclopedia", 1970—1971, Band 47, Nr. 10 A, Oktober 1970, Verlag McGraw-Hill, Inc., New York, Seite 134, 138 und 774; "Modern Plastics Encyclopedia", 1975—1976, Oktober 1975, Band 52, Nr. 10 A, Verlag McGraw-Hill, Inc., New York, Seite 27, 28 und 472 und US—PS 3 671 487, 3 723 373 und 3 838 092).

Gemäß dem erfindungsgemäßen Herstellungsverfahren für die Polyamid-Formmassen können die polytetrafluorethylenhaltigen Pfropfpolymerisate hergestellt werden, indem man wässrige Dispersionen des Tetrafluorethylenpolymerisats mit wässrigen Dispersionen des Pfropfpolymerisats, gegebenenfalls eines Vinylpolymerisats, im Verhältnis 20:80 bis 1:99 mischt, und diese Mischung in bekannter Weise durch Koagulation isoliert, wäscht und trocknet. Zur Koagulation geeignet sind beispielsweise Elektrolytlösungen, vorzugsweise wässrige Lösungen von $MgSO_4$ (Bittersalz) und Essigsäure bei pH 4—5. Die auf diese Weise erhaltenen Gemische aus Tetrafluorethylenpolymerisaten und Pfropfpolymerisaten werden, gegebenenfalls im Mischung mit weiteren Pfropfpolymerisaten, zur Herstellung der Polyamid-Formmassen verwendet.

Die erfindungsgemäßen Formmassen können übliche Additive, wei Gleit- und Entformungsmittel, Nukeierungsmittel, Stabilisatoren, Füll- und Verstärkungsstoffe, Flammschutzmittel, sowie Farbstoffe enthalten.

Die Formmassen können bis zu 60 Gew.-%, bezogen auf die verstärkte Formmasse, Füllstoffe und/oder Verstärkungsstoffe enthalten. Bevorzugte Verstärkungsstoffe sind Glasfersen. Bevorzugte Füllstoffe, die auch verstärkend wirken können, sind Glaskugeln, Glimmer, Silikate, Feldspat, Quarz, Talkum, Titandioxid, Wollastonit.

Zur Flammschutzausrüstung können alle bekannten Flammschutzmittel, wie z.B. cyclische Chlorverbindungen, Melamin und dessen Salze, wie Melamincyanurat oder Melaminsulfat und/oder roter Phosphor verwendet werden.

Die Mischungen aus Polyamid A und Pfropfkautschuk B können in den üblichen Mischaggregaten, wie Walzen, Knetern, Ein- und Mehrwellenextrudern, hergestellt werden. Die Temperatur bei der Herstellung der Mischungen sollte mindestens 10°C und zweckmäßig höchstens 90°C oberhalb des Schmelzpunktes des Polyamids liegen.

Beispiele:

A. Polyamid-6 mit einer relativen Viskosität (gemessen an einer 1 gew.-%igen Lösung in m-Kresol bei 25°C) von 3,5.

B. Pfropfpolymerisat, 80 Gew.-% Pfropfgrundlage aus vernetztem Polybutadien (Gelgehalt über 70 Gew.-%, gemessen in Toluol) und 20% Pfropfauflage aus Methylmethacrylat.

C. Mischung aus 95 Gew.-% Pfropfpolymerisat gemäß B und 5 Gew.-% Polytetrafluorethylen mit einem Fluorgehalt von 74 Gew.-%.

Herstellung des Gemisches aus Pfropfpolymerisat und Tetrafluorethylenpolymerisat (Komponente C).

100 Teile einer 40 gew.-%igen wäßrigen Dispersion des Pfropfpolymerisates B und 3,5 Teile einer Tetrafluorethylenpolymerisatdispersion mit einem Festgehalt von 60 Gew.-% und einem Fluorgehalt, bezogen auf den Feststoff, von 73,7 Gew.-%/(Teflon 30 N/Fa. Dupont) werden vermischt und mit 1,8 Gew.-%, bezogen auf Polymerfeststoff, phenolischer Antioxidantien stabilisiert.

Bei 85—95°C wird die Mischung mit einer wäßrigen Lösung von $MgSO_4$ (Bittersalz) und Essigsäure bei pH 4—5 kaoguliert, filtriert und bis zur praktischen Elektrolytfreiheit gewaschen, anschließend durch Zentrifugation von der Hauptmenge Wasser befreit und danach bei 100°C zu einem Pulver getrocknet.

Herstellung und Prüfung der Formmassen

Auf einem kontinuierlich arbeitenden Doppelwellenextruder wurden die Komponenten aufgeschmolzen und homogenisiert. Die Zylindertemperaturen wurden so gewählt, daß Massetemperaturen von 260—280°C eingehalten wurden. Der Schmelzstrang wurde vor dem Austritt aus der Düse entgast, in Wasser abgekühlt, granuliert und getrocknet.

Von den Formmassen wurden auf einer üblichen Spritzgußmaschine ASTM-Stäbe gespritzt (Massetemperatur 260°C, Formtemperatur 80°C). Geprüft wurden die Kerbschlagzähigkeit (nach Izod) bei den angegebenen Temperaturen sowie die Wärmeformbeständigkeit (Vicat-Erweichungstemperatur nach DIN 53 460, Methode B), Schmelzwärme nach der DSC-Methode mit einer Aufheizgeschwindigkeit von 20°C/min (s. Tabelle 1).

Zur Ermittlung des Entformungsverhaltens der Formmassen wurde eine Schwach konischer Zylinder gespritzt. Der große Außendurchmesser des Zylinders betrug 43 mm, der kleine Außendurchmesser 39

4

# EP 0 160 914 B1

mm, die Wanddicke 3 mm, und die Höhe des Zylinders 35 mm. Es wurden fortlaufend diese Zylinder gespritzt, wobei sich die Kerntemperatur, ausgehend von 60°C, langsam erhöht. Die Kraft, die von den Entformungsstiften aufgewendet werden mußte, um das Teil zu entformen, wurde in Abhängigkeit von der Temperatur gemessen. Üblicherweise ist dieser Druck bis zu einer kritischen Temperatur des Werkzeugs praktisch konstant. Oberhalb einer bestimmten Temperatur steigt die Entformungskraft plötzlich stark an. Diese Temperatur ist die Klebetemperatur der Masse. Sie bestimmt ganz entscheidend die Zykluszeit (s. Tabelle 1).

### TABELLE 1

| Beispiel | Komponente (Gew.-%) | | | Minimale Entform-barkeit (bar) | Klebetem-peratur (°C) | Izod bei −20°C (l/m) | Vicat B (°C) |
|---|---|---|---|---|---|---|---|
| | A | B | C | | | | |
| 1[1] | 80 | 20 | — | 30 | 85—90 | 250 | 170 |
| 2[1] | 70 | 30 | — | 20 | 80—85 | 700 | 150 |
| 3 | 80 | — | 20 | 35 | 95—100 | 800 | 200 |
| 4[1] | 70 | — | 30 | 22 | 80—85 | 700 | 155 |

[1] Vergleichsbeispiele

## Patentansprüche

1. Thermoplastischen Formmassen aus:
A. 80—97 Gew.-% eines Polyamids und
B. 3—20 Gew.-% eines Pfropfkautschuks mit einem Gelgehalt von mindestens 50 Gew.-% und einer Glasübergangstemperatur unter −20°C, wobei sich die Komponenten A und B auf 100 Gew.-% ergänzen, enthaltend 0,1 bis 1 Gew.-%, bezogen auf die Summe aus A+B, Tetrafluorethylenpolymerisate.
2. Verfahren zur Herstellung von Formmassen gemäß Anspruch 1, dadurch gekennzeichnet, daß man
a) zunächst eine wäßrige feinteilige Dispersion eines Pfropfpolymerisates B mit einer Dispersion eines Tetrafluorethylenpolymerisates mit mittleren Teilchengrößen von 0,05—20 μm vermischt, so daß das Gewichtsverhältnis von Pfropfpolymerisat B zu Tetrafluorethylenpolymerisat zwischen 80:20 und 99:1 ist,
b) aus dieser Mischung die Polymeren durch Koagulation isoliert und trocknet, und
c) das erhaltene Gemisch, gegebenenfalls nach Granulierung, mit Polyamid, gegebenenfalls weiteren Pfropfpolymerisaten und gegebenenfalls additiven in der Schmelze vermischt.

## Revendications

1. Mélanges à mouler thermoplastiques, constitués de:
A. 80 à 97% en poids d'un polyamide et
B. 3 à 20% en poids d'un caoutchouc de greffage ayant une teneur en gel d'au moins 50% en poids et une température de transition vitreuse inférieure à −20°C, le total des composants A et B atteignant 100% en poids,
contenant 0,1 à 1% en poids, par rapport à la somme A+B, de polymérisats de tétrafluoréthylène.
2. Procédé de production de mélanges à mouler suivant la revendication 1, caractérisé en ce que:
a) on mélange tout d'abord une dispersion aqueuse de fines particules d'un polymerisat greffé B avec une dispersion d'un polymérisat de tétrafluoréthylène en particules d'un diamètre moyen de 0,05 à 20 μm de manière que le rapport du poids de polymérisat greffé B au poids de polymérisat de tétrafluoréthylène se situe entre 80:20 et 99:1,
b) on isole les polymères de ce mélange par coagulation et on les sèche, et
c) on mélange à l'état fondu, éventuellement après granulation, le mélange obtenu avec un polyamide, éventuellement d'autres polymérisats greffés et le cas échéant des additifs.

## Claims

1. Thermoplastic moulding compounds of
A. 80 to 97% by weight of a polyamide and
B. 3 to 20% by weight of a graft rubber having a gel content of at least 50% by weight and a glass transition temperature below −20°C, components A and B adding up to 100% by weight
containing 0.1 to 1% by weight, based on the sum of A+B, of tetrafluoroethylene polymers.
2. A process for the production of the moulding compounds claimed in claim 1, characterized in that

a) an aqueous finely divided dispersion of a graft polymer B is first mixed with a dispersion of a tetrafluoroethylene polymer having average particle sizes of 0.05 to 20 μm so that the ratio by weight of graft polymer B to tetrafluoroethylene polymer is from 80:20 to 99:1,

b) the polymers are isolated from this mixture by coagulation and dried and

c) the mixture obtained, optionally after granulation, is mixed in the melt with polyamide, optionally other graft polymers and optionally additives.